# EUROPÄISCHE PATENTANMELDUNG

(11) **EP 3 540 698 A1**
(43) Veröffentlichungstag der Anmeldung: **18.09.2019**
(21) Anmeldenummer: 19162508.6
(22) Anmeldetag: 13.03.2019
(51) Int. Cl.: G07C 3/14

(54) **VERFAHREN ZUR FEHLERERKENNUNG UND ANLAGE ZUM BEARBEITEN EINES WERKSTÜCKS**

(30) Priorität: 15.03.2018 DE 102018203977
(71) Anmelder: HOMAG GmbH, 72296 Schopfloch (DE)
(72) Erfinder: ROTHFUSS, Stefan, 72270 Baiersbronn (DE); ZETZSCHE, Michael, 72458 Albstadt (DE)
(74) Vertreter: Hoffmann Eitle

(57) **Zusammenfassung**

Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist. Das Verfahren umfasst die Schritte: Erfassen einer Zustandsinformation, die sich auf einen Werkstückdurchfluss bezieht, in zumindest zwei Segmenten der Anlage; auf Basis der Zustandsinformationen ermitteln, ob ein Fehler vorliegt; wenn ein Fehler vorliegt, Identifizieren in welchem der zumindest zwei Segmente der Anlage der Fehler vorliegt, zum örtlichen Eingrenzen der Fehlerursache; und Ausgeben eines Signals, das die Information enthält, in welchem Segment der Fehler vorliegt.

## Beschreibung

Die vorliegende Erfindung betrifft ein Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist. Die vorliegende Erfindung betrifft ferner die Verwendung eines solchen Verfahrens, einen Datenträger, auf dem ein Programm gespeichert ist, das zum Ausführen des Verfahrens geeignet ist, ein Sensorausrüstungsset für eine Anlage zum Bearbeiten eines Werkstücks, und eine Anlage zum Bearbeiten eines Werkstücks.

Anlagen zum Bearbeiten eines Werkstücks mit Laufbändern, auf denen Werkstücke gefördert werden, werden oft mit hoher Durchsatzgeschwindigkeit betrieben. Zum Beispiel in einer industriellen Kantenanlage für Holzwerkstücke, in welcher letztere mit einer Massivholz- oder Papierkante versehen werden, - wie sie in der Möbelherstellung Verwendung finden - werden teilweise zwischen 8000 und 12000 Werkstücke pro Tag bearbeitet.

Die Erfahrung zeigt, dass in solchen Hochleistungsanlagen ein Leistungsverlust auftreten kann, dessen Ursache nicht leicht festzustellen ist. Manchmal tritt ein solcher Leistungsverlust zudem schleichend auf, so dass die Anzahl bearbeiteter Werkstücke pro Tag langsam zurückgeht und der Rückgang nicht sofort erkannt wird. Ist die Leistung dann irgendwann spürbar abgefallen (beispielsweise um 10 oder 20 Prozent), so ist zwar sicher, dass ein Fehler in der Anlage vorliegt - zum Beispiel ein Defekt an einem Laufband oder an einer Maschine -, es ist aber unklar, woher der Fehler rührt. Zudem ist ein solcher spürbarer Leistungsabfall als solches nicht wünschenswert, ein früheres Eingreifen aber möglicherweise aus wirtschaftlichen Gründen nicht durchführbar.

Das Erkennen eines Fehlers erfolgt daher oft erst spät, nachdem sich ein schleichender Leistungsverlust bereits über einen gewissen Zeitraum fortgesetzt hat, bis sich ein spürbarer Leistungsabfall der Anlage bemerkbar macht. Da die Werkstückbearbeitungsanlagen in der Regel komplex aufgebaut sind und über mehrere Bearbeitungsaggregate (beispielsweise ein Sägeaggregat, ein Bohraggregat, ein Verleimungsaggregat, ein Pressaggregat, ein Schweißaggregat, etc.), sowie dazwischenliegende Laufbandabschnitte verfügen, kann das im Anschluss an das Erkennen eines Fehlers erfolgende Identifizieren einer Fehlerursache zeitaufwendig sein. Manchmal ist es auch notwendig, die Produktion in einer Anlage zu unterbrechen, um in diversen Aggregaten und bei diversen Laufbandabschnitten weitere Abklärungen durchzuführen, um festzustellen, ob die betreffenden Aggregate bzw. Laufbandabschnitte einen Fehler (Defekt) aufweisen.

Es ist nachteilig, dass ein Erkennen eines Fehlers oft erst spät möglich ist. Weiterhin ist es nachteilig, dass sich ein schleichender Leistungsverlust nicht früher erkennen lässt, und dass sich als Voraussetzung für ein Erkennen bzw. für ein Eingreifen durch Ausschalten der Anlage und Untersuchungen zuerst ein bemerkbarer Leistungsabfall in der Anlage einstellen muss. Überdies ist es auch von Nachteil, dass erhebliche Produktionsverluste durch Ausfallzeiten entstehen können.

Es ist somit eine Aufgabe der vorliegenden Erfindung, einen oder mehrere der beschriebenen Nachteile bekannter Werkstückbearbeitungsanlagen zu beseitigen.

### Beschreibungseinleitung

Ein Aspekt der vorliegenden Erfindung bezieht sich auf ein Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist, und wobei die Anlage mehrere Segmente aufweist. Dabei kann eine Einteilung der Anlage in Segmente zur Durchführung des Verfahrens geeignet vorgenommen werden, d.h., dass beispielsweise definiert werden kann, dass die Anlage als in zwei oder in mehr (zum Beispiel in fünfzehn etc.) Segmente unterteilt zu betrachten ist.

Das Verfahren umfasst die Schritte: Erfassen einer Zustandsinformation, die sich auf einen Werkstückdurchfluss bezieht, in zumindest zwei Segmenten der Anlage; auf Basis der Zustandsinformationen Ermitteln, ob ein Fehler vorliegt; wenn ein Fehler vorliegt, Identifizieren in welchem der zumindest zwei Segmente der Anlage der Fehler vorliegt, zum örtlichen Eingrenzen der Fehlerursache; und Ausgeben eines Signals, das die Information enthält, in welchem Segment der Fehler vorliegt.

Vorzugsweise wird ermittelt, ob ein zukünftiger Leistungsverlust der Anlage zu erwarten ist, und dass ein Fehler vorliegt, wenn ein zukünftiger Leistungsverlust erwartet wird. Auf diese Weise wird bereits proaktiv ein Fehler identifiziert (d.h., auf das Vorliegen des Fehlers geschlossen), wenn ein Leistungsverlust noch gar nicht tatsächlich aufgetreten ist, sondern bereits dann, wenn in der Zukunft ein Leistungsverlust zu erwarten ist (ein zukünftiger Leistungsverlust). Der Leistungsverlust ist bei einigen Ausführungsformen dadurch definiert, dass eine Stückzahl von durch die Anlage während einer vorbestimmten Zeiteinheit verarbeiteten Werkstücken unter einen vorbestimmten Grenzwert fällt. Bei anderen Ausführungsformen ist der Leistungsverlust als eine andere die Leistung der Anlage quantifizierende Kenngröße definiert, oder beispielsweise als ein unter einen vorbestimmten Grenzwert Fallen einer solchen Kenngröße. Bei einigen Ausführungsformen ist ein Leistungsverlust definiert als das außerhalb eines vorbestimmten Wertebereichs Fallen einer solchen Kenngröße.

Die vorbestimmte Zeiteinheit kann beispielsweise ein Minute, eine Stunde, oder ein Tag (oder eine andere geeignete Zeiteinheit) sein. Bei einigen Ausführungsformen kann ein Benutzer die Zeiteinheit auch selbst vorbestimmen oder anpassen. So kann ein Leistungsverlust beispielsweise dadurch definiert sein, dass die Anlage weniger als 8500 Werkstücke pro Tag verarbeitet, etc. Vorzugsweise wird der Grenzwert in der Holzverarbeitung (insbesondere der Kantenverarbeitung) in einem Bereich von 7000 bis 10000 Werkstücke pro Tag (oder einer dazu äquivalenten Größe) definiert.

Vorzugsweise wird das Vorliegen des Fehlers ermittelt, bevor der Leistungsverlust tatsächlich auftritt. Dadurch wird bereits dann ein Fehler erkannt, wenn ein Leistungsverlust sich erst schleichend bemerkbar machen würde bzw. wenn sich ein Leistungsverlust gar erst anbahnt, d.h., bevor also ein tatsächlicher Leistungsverlust auftritt. Bevor die verarbeitete Stückzahl absinkt kann also beispielsweise erkannt werden, dass eine Reduktion der Stückzähl demnächst zu erwarten ist. Auf Basis dieser Information kann dann proaktiv eingegriffen werden. Zum Beispiel kann ein Wartungszeitpunkt vorgezogen werden, oder es kann während einer Routinewartung auch spezifisch Aufmerksamkeit auf das als mit einem Fehler behaftet identifizierte Segment der Anlage gerichtet werden, etc. Somit kann gegen einen tatsächlichen Leistungsverlust vorgebeugt werden. Oft lässt sich dieser sogar verhindern, oft jedenfalls abschwächen.

Bei einigen Ausführungsformen wird der Fehler auf Basis einer zeitlichen Entwicklung von erfassten Zustandsinformationen ermittelt. Auf diese Weise lassen sich beispielsweise Tendenzen frühzeitig erkennen, und somit kann gegen einen schleichenden Leistungsverlust vorgebeugt werden.

Die Anlage kann zwei oder mehr Segmente aufweisen, und bei einigen Ausführungsformen wird nicht in allen Segmenten eine Zustandsinformation erfasst, sondern beispielsweise nur in zwei oder in einer anderen bestimmten Anzahl von Segmenten. Bei anderen Ausführungsformen wird in jedem Segment eine Zustandsinformation erfasst. Die Aufteilung in Segmente kann dabei stark kompartimentiert sein - also beispielsweise so, dass jedes Bearbeitungsaggregat der Anlage in einem unterschiedlichen Segment positioniert ist oder sogar so, dass ein Aggregat mehreren Segmenten zugeordnet ist (und ein Aggregat selbst "segmentiert" ist), und/oder so, dass verschiedene Laufbandabschnitte verschiedenen Segmenten zugeordnet sind - oder die Aufteilung kann grob sein - also zum Beispiel so, dass mehrere Aggregate in einem Segment angeordnet sind, etc.

Die in verschiedenen Segmenten erfasste Zustandsinformation kann dieselbe Zustandsinformation oder es können in wenigstens zwei Segmenten voneinander verschiedene Sorten von Zustandsinformationen erfasst werden.

Die auf einen Werkstückdurchfluss bezogene Zustandsinformation ist eine Zustandsinformation, die mit der Dynamik des Prozesses in der Anlage assoziiert ist, also nicht ein statischer Parameter der Anlage. Wenn die Anlage läuft, und somit Werkstücke in der Anlage gefördert und bearbeitet werden, so liegt ein Werkstückdurchfluss vor. Abzugrenzen ist die Zustandsinformation, die sich auf einen Werkstückdurchfluss bezieht, von einem Messwert, der sich ausschließlich auf statische Eigenschaften der Anlage oder von Werkstücken bezieht.

Da sich ein schleichender Leistungsverlust auf den Werkstückdurchfluss auswirkt, ist der beschriebene Typ von auf Werkstückdurchfluss bezogener Zustandsinformation eine besonders geeignete Größe zur frühzeitigen Erkennung eines Leistungsverlusts oder eines Fehlers (Defekts) in der Anlage. Wenn ein Leistungsabfall eintritt und der Durchfluss von Werkstücken absinkt, so ändert sich auch eine Zustandsinformation, die sich auf den Werkstückdurchfluss bezieht. Die Zustandsinformation ist somit ein Parameter, der sich ändert, wenn sich der Werkstückdurchfluss ändert (wenn sich beispielsweise die durchschnittliche Anzahl von in einer vorbestimmten Zeiteinheit bearbeiteter bzw. geförderter Werkstücke ändert).

Da in zumindest zwei Segmenten eine Zustandsinformation gemessen wird, lässt sich beim Auftreten eines Fehlers erkennen, in welchem Segment der Anlage (aller Voraussicht nach) ein Fehler bzw. Defekt vorliegt. Da zudem ein Signal ausgegeben wird, welches einer Person anzeigt, in welchem Segment der Fehler auftritt, lässt sich die Fehlerursache effizient eingrenzen. Dies ist vorteilhaft, da weitere Abklärungen ortsspezifisch in der Anlage durchgeführt werden können. Eine Möglichkeit besteht zum Beispiel darin, nur einen Teil (zum Beispiel das Segment mit dem erkannten Fehler) vorübergehend auszuschalten und zu untersuchen. Andere Teile der Anlage können weiterhin betrieben werden. Auf diese Weise lassen sich Produktionsverluste verringern oder sogar eliminieren.

Das Ausgeben des Signals kann zentral oder dezentral erfolgen. Zum Beispiel kann ein jeweiliges Fehlersignal bei dem jeweiligen Segment ausgegeben werden. Alternativ dazu können Signale für alle Segmente an einen Computer und/oder eine Steuerung ausgegeben werden. Einige oder alle Segmente, bei denen eine Zustandsinformation erfasst wird, können auch Information an ein anderes Verarbeitungselement übermitteln, und das genannte andere Verarbeitungselement gibt dann ein Signal aus.

Gemäß einiger bevorzugter Ausführungsformen wird das Verfahren bei einer Anlage genutzt, die zwei oder mehr Aggregate zum Bearbeiten oder Überprüfen von Werkstücken aufweist, wobei mindestens zwei Aggregate unterschiedlichen Segmenten zugeordnet sind. Auf diese Weise lässt sich die Fehlerursache aggregatsspezifisch eingrenzen. Gemäß einiger Ausführungsformen wird bei einer Vielzahl von (zum Beispiel bei allen) Aggregaten eine Zustandsinformation erfasst und nach Fehlern gesucht. Dies macht die Fehlererkennung und Ursacheneingrenzung besonders effizient und schafft eine höhere Ortsauflösung der Fehlereingrenzung.

Gemäß einiger bevorzugter Ausführungsformen beinhaltet das Identifizieren, dass der Fehler einem bestimmten Aggregat oder einem bestimmten Teil der Anlage zwischen zwei Aggregaten zugeordnet wird, und das ausgegebene Signal beinhaltet die Information, welches Aggregat oder welcher Teil der Anlage zwischen zwei Aggregaten fehlerbehaftet ist. Dabei kann ein Teil zwischen zwei Aggregaten oder können mehrere Teile zwischen Aggregaten Laufbandabschnitte sein oder einen oder mehrere Laufbandabschnitte aufweisen. Die Ursacheneingrenzung für Fehler ist bei diesen Ausführungsformen besonders spezifisch.

Gemäß einiger bevorzugter Ausführungsformen wird die erfasste Zustandsinformation mit einem oberen und/oder einem unteren Schwellenwert verglichen, und es wird ermittelt, dass ein Fehler vorliegt, wenn ein ermittelter Zustandsinformationswert größer ist als der obere Schwellenwert und/oder kleiner ist als der untere Schwellenwert. Ebenfalls lassen sich mit Schwellenwertüberwachungen Fehlerentwicklungstendenzen überwachen.

Gemäß einiger bevorzugter Ausführungsformen ist die erfasste Zustandsinformation in mindestens einem Segment eine Taktzahl, insbesondere eine Anzahl geförderter Werkstücke pro Zeiteinheit. Die Zeiteinheit ist beispielsweise eine Sekunde, eine Minute, eine Stunde, ein Tag, oder eine andere durch einen Benutzer vorbestimmte Zeiteinheit. Bevorzugte Taktzahlen in Holzbearbeitungsanlagen (zum Beispiel eine Kantenanlage) liegen beispielsweise in einem Bereich von 5000/Tag bis 15000/Tag, vorzugsweise 8000/Tag bis 12000/Tag. Die erfasste Zustandsinformation kann auch in zwei oder mehr (oder in allen) Segmenten eine Taktzahl, insbesondere eine Anzahl geförderter Werkstücke pro Zeiteinheit, sein. Dabei kann die Taktzahl in verschiedenen Segmenten auch unterschiedlich sein (zum Beispiel unterschiedliche vorbestimmte Zeiteinheiten). Besonders bevorzugt ist die Anwendung des Verfahrens in Holz- oder Holzwerkstoffbearbeitungsanlagen, etwa in Kantenbeschichtungsanlagen.

Gemäß einiger bevorzugter Ausführungsformen ist die erfasste Zustandsinformation in mindestens einem Segment ein minimaler Abstand, ein maximaler Abstand, eine Rüstlücke zwischen zwei im Durchfluss aufeinanderfolgender Werkstücke, eine andere sich auf eine Lücke zwischen zwei aufeinanderfolgenden Werkstücken beziehende Größe, oder eine Zeitdauer zwischen einem ersten Zeitpunkt, zu welchem Daten für ein früheres Werkstück erfasst werden, und einem zweiten Zeitpunkt, zu welchem Daten für ein späteres Werkstück erfasst werden. Diese Zustandsinformationen eignen sich hervorragend zum Erkennen eines Fehlers, beispielsweise auch eines schleichenden Leistungsverlusts. Dabei können auch erfasste Zustandsinformationen in mehreren Segmenten verglichen werden. Ebenfalls ist es möglich, mehrere Zustandsinformationen in einem Segment oder dieselbe Zustandsinformation an mehreren Stellen im selben Segment zu erfassen.

Wenn beispielsweise die Rüstlücke zwischen zwei aufeinanderfolgenden Werkstücken in einem bestimmten Segment abnimmt, so lässt sich vermuten, dass dieses Aggregat eine Verzögerung verursacht. Dabei wird frühzeitig ein schleichender Leistungsverlust erkannt, denn die Taktzahl für die gesamte Anlage bleibt möglicherweise vorläufig noch unverändert, obwohl die Rüstlücke schleichend kleiner wird. Wird beispielsweise die Rüstlücke kleiner nach einem Verleimungsaggregat, so lässt sich dieses Aggregat verfahrensmäßig als Fehlerursache identifizieren. Eine mögliche Ursache ist beispielsweise, dass eine Leimtemperatur nicht (mehr) richtig abgestimmt ist, weil beispielsweise ein Heizelement Verschleißerscheinungen zeigt, oder dass ein Kantenanpresselement zu wenig Druck auf die Kanten ausübt, etc.

Als Rüstlücke wird bei einigen Ausführungsformen ein Abstand zwischen zwei einander zugewandten Kanten von Werkstücken gemessen, und zwar von gegenteiligen Ecken, d.h., wenn von oberhalb des Laufbands betrachtet, zum Beispiel von einer linken oberen Ecke des einen Werkstücks zu einer zugewandten rechten unteren Ecke des anderen, benachbarten Werkstücks (oder umgekehrt). Alternativ dazu lässt sich auch ein minimaler Abstand oder ein maximaler Abstand oder ein Abstand zwischen denselben Ecken (linke und linke Ecke oder rechte und rechte Ecke) oder von anderen gegenüberliegenden Punkten an den Kanten benachbarter Werkstücke messen. Die Messung kann dabei mit einem oder mehreren Sensoren - beispielsweise Lasersensoren - erfolgen.

Gemäß einiger bevorzugter Ausführungsformen ist die erfasste Zustandsinformation in mindestens einem Segment eine Zeitdauer, die ein Aggregat gebraucht hat, um von einem Istzustand in einen Sollzustand zu wechseln. Ein Beispiel dafür ist die Zeitdauer, die ein Aggregat braucht, um nach der Bearbeitung eines ersten Werkstücks wieder in eine Ausgangsposition bzw. einen Ausgangszustand zu gelangen, um ein zweites Werkstück zu bearbeiten. Ein Beispiel für eine solche zu erfassende Zeitdauer ist die Loswechselzeit (die Zeitdauer, die benötigt wird, um ein Aggregat auf das nächste, zu bearbeitende Werkstück einzustellen).

Gemäß einiger bevorzugter Ausführungsformen wird ein Fehler aus einer Tendenz von Messwerten einer erfassten Zustandsinformation oder mehrerer erfasster Zustandsinformationen erkannt. Auf diese Weise lässt sich eine besonders proaktive, frühzeitige Fehlererkennung durchführen. Insbesondere lassen sich schleichende Leistungsverluste besonders früh erkennen, selbst dann, wenn sich diese noch nicht in einem Produktionsverlust niederschlagen. Wenn beispielsweise die Rüstlücke jeden Tag um 0.1% abfällt bei einem bestimmtem Laufbandabschnitt, so kann der betroffene Laufbandabschnitt sehr frühzeitig (beispielsweise während einer regulären Auszeit der Anlage) untersucht und bei Notwendigkeit entsprechend gewartet werden. Entsprechend kann auch mit Aggregaten umgegangen werden.

Ein weiterer Aspekt der vorliegenden Erfindung liegt in der Verwendung des Verfahrens gemäß irgendeiner der vorstehend beschriebenen Ausführungsformen (oder einer Kombination verschiedener Ausführungsformen) in einer Kantenanlage zum Bearbeiten einer Kante eines Werkstücks und/oder zum Aufbringen eines Kantenelements an einem Werkstück. In solchen Kantenanlage ist eine frühzeitige Fehlererkennung und eine Eingrenzung einer Fehlerursache besonders vorteilhaft, da große Taktzahlen (zum Beispiel 8000-12000 Werkstücke pro Tag) erreicht werden, und somit eine zusätzliche Auszeit zu einem spürbaren Leistungsverlust führt.

Die Erfindung betrifft auch einen Datenträger, auf dem ein Programm gespeichert ist, welches dazu geeignet ist, auf einer Datenverarbeitungsanlage ausgeführt zu werden, die gemeinsam mit einer Anlage zum Bearbeiten eines Werkstücks, das vorzugsweise zumindest abschnittsweise aus Holz, einem Holzwerkstoff, und/oder einem Kunststoff ausgebildet ist, betreibbar ist, so dass das Verfahren gemäß einer der vorstehend beschriebenen Ausführungsformen oder einer Kombination derselben durchgeführt wird. Somit lässt sich eine bestehende Steuerung einer Anlage mit dem Programm bestücken, so dass die Steuerung zum Ausführen des Verfahrens beitragen kann.

Ebenfalls bezieht sich die Erfindung auf ein Sensorausrüstungsset zum Sensoren Ausrüsten einer Anlage zum Bearbeiten eines Werkstücks, das vorzugsweise zumindest abschnittsweise aus Holz, einem Holzwerkstoff, und/oder einem Kunststoff ausgebildet ist, mit einer Sensorik, zum Einrichten der Anlage zur Durchführung eines Verfahrens zum Erkennen eines Fehlers und zum örtlichen Eingrenzen eines Fehlers, wobei die Sensorik mehrere für das Erfassen einer Zustandsinformation, die sich auf einen Werkstückdurchfluss bezieht, geeignete Sensoren aufweist.

Mit dem Sensorausrüstungsset kann eine Anlage, die nicht zum Ausführen des Verfahrens gemäß einem der vorstehenden beschriebenen Aspekte bzw. einer oder mehrerer der beschriebenen Ausführungsformen geeignet ist, nachrüsten, so dass das Verfahren ausgeführt werden kann. Es lässt sich daher vermeiden, dass Anlagen komplett ersetzt werden müssen, um eine proaktivere Fehlerfrüherkennung durchführen zu können. Dies ist von besonderem Vorteil, da in Anlagen bereits vorhandene Sensoren nicht optimal positioniert sind, um Zustandsinformationen zu erfassen, die sich auf den Werkstückdurchfluss beziehen und oft der jeweils vorhandene Sensortyp auch nicht für eine Werkstückdurchflusszustandsinformationserkennung abgestimmt ist. Das Sensorausrüstungsset kann hingegen mit Sensoren des Typs oder derjenigen Typen versehen werden, die für das Erfassen von Zustandsinformationen besonders geeignet sind (beispielsweise Lasersensoren), und die Sensoren können an den Stellen angebracht werden, an denen eine Zustandsinformation erfasst werden soll. Zum Beispiel kann in einem oder in mehreren Segmenten ein Sensor oder mehrere Sensoren oberhalb und/oder unterhalb des Laufbands angebracht werden, und bei einem oder mehreren Aggregaten (nach Wunsch auch bei jedem Aggregat der Anlage) können ein oder mehrere Sensoren angebracht werden.

Gemäß einiger bevorzugter Ausführungsformen weist das Sensorausrüstungsset mindestens eine Sensoreinrichtung mit zumindest einem der Sensoren des Sets auf, wobei die Sensoreinrichtung dazu eingerichtet ist, ein Signal über eine Kabelverbindung oder drahtlos an ein Empfangsgerät zu übermitteln. Dabei kann der Teil der Einrichtung, der zum Versenden von Daten eingerichtet ist, einstückig mit dem Sensor oder als separates Bauteil oder als separate Bauteile ausgebildet sein.

Einige bevorzugte Ausführungsformen des Sensorausrüstungssets bzw. Sensornachrüstsets weisen ferner einen vorstehend beschriebenen Datenträger auf. Somit lässt sich das Sensornachrüstset sowohl dazu verwenden, eine Anlage mit den zum Erfassen gewünschter Werkstückdurchflusszustandsinformation notwendigen Sensoren zu bestücken, als auch eine Datenverarbeitungsanlage in die Lage zu versetzen, mit der Anlage und den Sensoren zusammen zu arbeiten, um das erfindungsgemäße Verfahren oder eine Weiterbildung davon in der laufenden Anlage zu betreiben.

Ein Aspekt der Erfindung bezieht sich auf eine Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist und jedes Segment zumindest einen Sensor zum Erfassen einer Zustandsinformation, die sich auf einen Werkstückdurchfluss bezieht, aufweist. Die Anlage weist ferner eine Steuerung auf, die dazu eingerichtet ist, das Verfahren nach einem der vorstehend beschriebenen Aspekte auszuführen.

Gemäß einiger Ausführungsformen ist die Anlage mit einem Sensorausrüstungsset nach einem der vorstehend beschriebenen Aspekte versehen.

### Kurze Beschreibung der Figuren

Im Folgenden werden bevorzugte Ausführungsformen der vorliegenden Erfindung unter Bezugnahme auf die Figuren beschrieben.

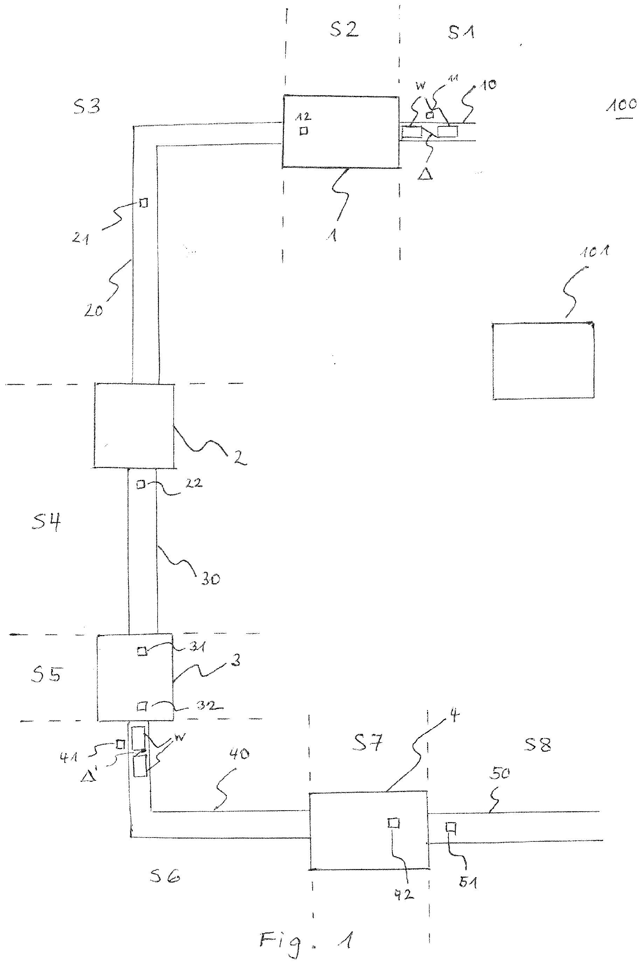

- Fig. 1: ist eine schematische Ansicht einer Anlage zum Bearbeiten eines Werkstücks.

Fig. 1 ist eine schematische Ansicht einer Anlage 100 zum Bearbeiten eines Werkstücks w, das zumindest abschnittsweise aus Holz oder einem Holzwerkstoff ausgebildet ist. Konkret handelt es sich bei der dargestellten Anlage 100 um eine Kantenanlage zum Anbringen von Massivholz- oder Papierkanten an Holz- oder Holzwerkstoffstücken. Allerdings ist die vorliegende Offenbarung keineswegs auf Anlagen dieses Typs oder auf die Durchführung von Verfahren bei Anlagen dieses Typs beschränkt.

Zum Durchführen eines Verfahrens zum Erkennen eines Fehlers und zum örtlichen Eingrenzen einer Fehlerursache in der Anlage 100, ist die Anlage 100 in Segmente unterteilt. Bei einigen Ausführungsformen beträgt die Gesamtanzahl von Segmenten zwei, bei anderen Ausführungsformen ist die Anzahl höher, eventuell auch wesentlich höher. Die Anlage von Fig. 1 ist in acht Segmente S1 bis S8 unterteilt.

Die Anlage 100 weist zudem vier Bearbeitungsaggregate 1, 2, 3, 4 zum Bearbeiten von Werkstücken - bei dieser Anlage zum Anbringen von Kanten an Werkstücken - auf. Andere Ausführungsformen können eine abweichende Anzahl von Bearbeitungsaggregaten aufweisen. Zudem können Anlagen, bei denen das Verfahren durchgeführt wird, auch Überprüfungsaggregate und/oder Aggregate aufweisen, die eine oder mehrere Bearbeitungs- und/oder Überprüfungsfunktionen ausführen. Ein Beispiel für ein Aggregat ist ein Kantenbeschichtungsaggregat, das eine Kante an einem Holzwerkstück anbringt, beispielsweise beim Herstellen eines Tisches. Andere Beispiele sind ein Säge-, ein Bohr-, ein Fräs-, ein Verleimungs-, und/oder ein Schweißaggregat.

Im Fall von Fig. 1 sind sämtliche Aggregate 1 bis 4 unterschiedlichen Segmenten zugeordnet, nämlich den Segmenten S2, S4, S5 und S7. Bei anderen Ausführungsformen kann ein Segment auch zwei oder mehr Aggregate aufweisen.

Das erste Segment S1 weist einen Förderbandabschnitt 10 auf, der zu dem ersten Bearbeitungsaggregat 1 führt. Das zweite Segment S2 weist das erste Bearbeitungsaggregat 1 auf. Das dritte Segment S3 weist einen weiteren Förderbandabschnitt 20 auf, der von dem ersten Bearbeitungsaggregat 1 zu dem zweiten Bearbeitungsaggregat 2 führt. Das vierte Segment S4 weist sowohl das zweite Bearbeitungsaggregat 2 als auch einen weiteren Förderbandabschnitt 30 auf, der von dem zweiten Bearbeitungsaggregat 2 zu dem dritten Bearbeitungsaggregat 3 führt. Bei anderen Ausführungsformen ist die Anlage hingegen feiner unterteilt, sodass jedes Aggregat einem eigenen Segment zugeordnet. Bei anderen Ausführungsformen sind wiederum mehrere Bandabschnitte und womöglich auch ein oder mehrere Aggregate demselben Segment zugeordnet.

Das fünfte Segment S5 weist das dritte Bearbeitungsaggregat 3 auf. Das sechste Segment S6 weist einen weiteren Förderbandabschnitt auf, der von dem dritten Bearbeitungsaggregat 3 zu dem vierten Bearbeitungsaggregat 4 führt. Das siebte Segment S7 weist das vierte Bearbeitungsaggregat 4 auf. Das achte Segment S8 weist schließlich einen Förderbandabschnitt 50 auf, der von dem vierten Bearbeitungsaggregat 4 bezüglich der Werkstückdurchflussrichtung stromabwärts führt.

In der Anlage 100 findet ein hoher Durchfluss an Werkstücken statt. Bei dieser Ausführungsform werden am Bandabschnitt 50 bei normalem Betrieb der Anlage 100 zwischen 10000 und 12000 bearbeitete Werkstücke abgeführt. Ziel ist es, einen wesentlichen Leistungsabfall (so dass irgendwann beispielsweise weniger als 10000 Stück pro Tag bearbeitet werden) zu vermeiden.

Die Anlage 100 weist ferner auch eine Steuerung 101 auf, die einen Betrieb der Anlage 100 steuert. Dabei finden bei dieser Ausführungsform unter anderem Regelungen von Aggregaten und Förderbandabschnitten statt. Die Steuerung 101 kommuniziert drahtlos mit Aggregaten und sammelt Dateninformationen von Sensoren, die in den Aggregaten angeordnet sind.

Die Anlage 100 ist über, dies mit speziellen Sensoren ausgestattet, die zum Durchführen des Fehlererkennungsverfahrens dienen. Hierzu wurde die Anlage mit einem (nicht dargestellten) Sensornachrüstset ausgerüstet, welches sowohl Sensoren aufweist, die zum Erfassen einer Zustandsinformation oder mehrere Zustandsinformationen geeignet sind, die sich auf einen Werkstückdurchfluss bezieht bzw. beziehen, als auch einen (nicht dargestellten) Datenträger, auf dem ein Programm gespeichert ist, welches dazu geeignet ist, mit der Steuerung 101 ausgeführt zu werden, so dass die Steuerung 101 gemeinsam mit den anderen Komponenten der Anlage 100 das zu beschreibende Fehlererkennungsverfahren durchzuführen.

Hierzu ist Sensor 11 oberhalb des Förderbandabschnitts 10 im ersten Segment S1 angeordnet. Weiterhin ist ein Sensor 12 im ersten Aggregat 1 (d.h. im zweiten Segment S2) angeordnet. Ein Sensor 21 ist beim Bandabschnitt 20 im dritten Segment S3 angeordnet. Ein weiterer Sensor 22 ist am Bandabschnitt 30 im vierten Segment S4, direkt stromabwärts vom zweiten Aggregat 2, angeordnet. Das fünfte Segment S5 weist im dritten Aggregat 3 weitere Sensoren 31 und 32 auf. Ein Sensor 41 ist auch oberhalb des Förderbandabschnitts 40 im sechsten Segment S6 angeordnet. Das siebte Segment S7 weist im vierten Aggregat 4 einen Sensor 42 auf, und ein Sensor 51 ist auch im achten Segment S8, am Bandabschnitt 50 angeordnet.

Sämtliche der genannten zusätzlichen Sensoren 11, 12, 21, 22, 31, 32, 41, 42 und 51 ("zusätzlich" zu bereits in einer gewöhnlichen Anlage, die nicht zum Ausführen des Fehlererkennungsverfahrens gemäß dieser Offenbarung ausgebildet sind) sind zum Erfassen einer Zustandsinformation, die sich auf einen Werkstückdurchfluss bezieht, geeignet. Dabei ist die zu erfassende Zustandsinformation nicht die gleiche bei allen der genannten Sensoren 11 bis 51.

Die Sensoren 22, 32 und 51 sind beispielsweise zum Erfassen einer Taktzahl, nämlich der Anzahl geförderter Werkstücke w pro Zeiteinheit, ausgebildet. Dabei erfassen die Sensoren 22 und 51 die Taktzahl am Laufband, während der Sensor 32 im Aggregat 3 Taktzahlen erfasst.

Der Sensor 11 ist zum Erfassen einer Rüstlücke Δ am Laufband 10 eingerichtet, und zwar einer als eine Diagonale definierte Rüstlücke, d.h. ein Abstand von zugewandten, aber nicht gegenüberliegender Kanten von aufeinanderfolgenden Werkstücken. D.h., dass beispielsweise (in der Zeichnungsebene von Fig. 1) der Abstand zwischen der rechten oberen Ecke vom linken (stromabwärtigen) Werkstück und der linken unteren Ecke des rechten (stromaufwärtigen) Werkstücks erfasst wird (wie in Fig. 1 schematisch dargestellt). Der Rüstlückenwert kann dabei beispielsweise im Meter-, Zentimeter-, Millimeter-, oder Mikrometerbereich liegen und erfasst werden.

Der Sensor 41 ist ebenfalls zum Erfassen einer Rüstlücke Δ' eingerichtet, wobei die Differenz der erfassten Werte Δ und Δ' beziehungsweise die Entwicklung eines Differenzwerts Δ-Δ' im Verlauf der Zeit auf einen Fehler hinweisen kann.

Der Sensor 21 ist bei dieser Ausführungsform hingegen zum Erfassen eines minimalen und eines maximalen Abstands zwischen zwei Werkstücken eingerichtet. Der Sensor 21 kann beispielsweise Hinweise auf eine Schrägstellung von Werkstücken auf dem Laufbandabschnitt 20 liefern. Wenn eine Schrägstellung vermutet wird, nachdem eine entsprechende Fehlermeldung ausgegeben wurde, so kann beispielsweise untersucht werden, ob ein Positionierelement, welches Werkstücke auf dem Laufband positioniert oder in Position hält, einen Defekt aufweist.

Der Sensor 31 ist zum Erfassen einer Zeitdauer eingerichtet zwischen einem ersten Zeitpunkt, zu welchem Daten für ein früheres Werkstück erfasst werden, und einem zweiten Zeitpunkt, zu welchem Daten für ein späteres Werkstück erfasst werden. Dabei sind das frühere und das spätere Werkstück hier in der Förderreihe aufeinanderfolgende Werkstücke. Allerdings lässt sich der Sensor beispielsweise auch nutzen, um beispielsweise die Zeitdauer zwischen Zeitpunkten zu erfassen, die zwischen Zeitpunkten liegt, die beispielsweise mit den Messungen bei jedem fünften oder jedem zehnten (oder einer beliebigen anderen durch einen Benutzer voreingestellten Anzahl von) geförderten Werkstück assoziiert sind.

Der Sensor 42 im Aggregat 4 ist dazu eingerichtet, eine Loswechseldauer zu erfassen, d.h., eine Zeitdauer ist, die ein Aggregat braucht, um von einem Istzustand in einen Sollzustand zu gelangen. Das Aggregat 4 muss nach Bearbeitung eines Werkstücks jeweils in den Ausgangszustand für eine bestimmte Bearbeitung bzw. einen Bearbeitungsschritt zurückgefahren werden, bevor die Bearbeitung des nächsten Werkstücks beginnen kann. Die Loswechselzeit kann beispielsweise in einem Sekundenbereich, einem Millisekundenbereich oder einem Nanosekundenbereich liegen.

Bei dieser Ausführungsform ist die Steuerung 101 dazu eingerichtet, stets zu überprüfen, ob die gemessenen Rüstlücken groß genug sind, damit aufgrund der gemessenen Loswechseldauern beim Sensor 42 keine Verzögerungen im Laufbandprozess zu erwarten sind. Wenn sich ein schleichender Leistungsverlust abzeichnet und zukünftig Verzögerungen zu erwarten sind, so wird proaktiv eine Fehlermeldung ausgegeben.

Allgemeiner sind bei dieser Ausführungsformen einer Anlage 100 die beschriebenen Sensoren 11, 12, 21, 22, 31, 32, 41, 42 und 51 jeweils mit korrespondierenden Einrichtungen verbunden (wobei diese Einrichtungen gemeinsam mit dem jeweiligen assoziierten Sensor sogenannte Sensoreinrichtungen bilden), die dazu eingerichtet über eine drahtlose Kommunikation Daten an die Steuerung 101 zu übermitteln. Die Steuerung 101 empfängt diese Daten laufend und verarbeitet die Daten. Bei anderen Ausführungsformen ist die Kommunikation mit allen Sensoreinrichtungen oder mit einem Teil davon über eine Kabelverbindung implementiert. Bei dieser Ausführungsform verfügt die Steuerung 101 über ein Empfangsgerät, welches dazu geeignet ist, die drahtlos übermittelten Daten zu empfangen.

Die Anlage 100, und insbesondere die Steuerung 101, sind dazu eingerichtet, ein Verfahren zum Erkennen eines Fehlers in der Anlage 100 und zum örtlichen Eingrenzen einer Ursache des Fehlers auszuführen.

Das Verfahren umfasst das jeweilige Erfassen von vorstehend beschriebenen Zustandsinformationen, die sich auf einen Werkstückdurchfluss beziehen, mit jedem der Sensoren 11, 12, 21, 22, 31, 32, 41, 42 und 51 in den Segmenten S1 bis S8 der Anlage 100.

Die Zustandsinformationen werden jeweils an die Steuerung 101 übermittelt, und diese vergleicht bei dieser Ausführungsform für jeden der übermittelten Werte der jeweiligen Zustandsinformation, ob der Wert einen unteren Schwellenwert unterschreitet bzw. einen oberen Schwellenwert überschreitet. So wird beispielsweise überprüft, ob die Rüstlücke Δ, die vom Sensor 11 erfasst wurde, in einen Sollrüstlückenbereich fällt, und ob die Rüstlücke Δ', die vom Sensor 41 erfasst wurde, in einen Sollrüstlückenbereich fällt. Zudem wird auch zwischen den erfassten Werten verglichen, also beispielsweise zwischen der Rüstlücke Δ und der Rüstlücke Δ'. Der zeitliche Verlauf dieses Differenzwerts wird überwacht, um schleichende Tendenzen zu erkennen. Ferner werden auch zeitliche Entwicklungen von Messwerten beim selben Sensor überwacht, um statistisch signifikante Entwicklungen der Messwerte (oder anderer statistischer Größen, wie etwa des Mittels oder des Medians der erfassten Werte) - zum Beispiel Entwicklungen in einer bestimmten Richtung, also etwa einer statistischen Abnahme der Werte oder einer statistischen Zunahme - zu erkennen.

Abhängig von den erfassten und übermittelten Zustandsinformationswerten ermittelt die Steuerung 101, ob ein Fehler vorliegt. Dabei wird bei dieser Ausführungsform nicht bereits beim Vorliegen einer Abweichung eines Werts von einem Sollbereich auf einen Fehler geschlossen, sondern es lassen sich Schwellenwerte einstellen für Abweichungen oder für Abweichungstendenzen. So kann beispielsweise ermittelt werden, dass ein Fehler beim Sensor 41 vorliegt, wenn während einer längeren Zeitdauer die Rüstlücken Δ' um einen Schwellenwert oder mehr abweichen von den Rüstlücken Δ, die stromaufwärts gemessen worden sind. Alternativ dazu lässt sich beispielsweise auch auf einen Fehler schließen, wenn die Rüstlückenwerte im Mittel um mehr als einen bestimmten vorbestimmten Wert (zum Beispiel um mehr als 0.3% Prozent) angestiegen sind. Weiterhin wird bei dieser Ausführungsform auch überwacht, ob die gemittelten Messwerte über einen Zeitraum von 20 Minuten um mehr als 0.3% von dem vorherigen Mittel in einem Zeitraum von 20 Minuten abweichen. Zudem wird auch die Varianz der erfassten Werte für jeden Sensor separat überwacht, und es werden auch Korrelationen zwischen erfassten Werten bei verschiedenen Sensoren überwacht. Auf Basis solcher Überwachungen kann ein schleichender Leistungsverlust hochgradig effizient erkannt werden.

Allgemeiner ausgedrückt umfasst das Verfahren das auf Basis der erfahren Zustandsinformationen Ermitteln, ob ein Fehler vorliegt. Das Verfahren umfasst auch, wenn ein Fehler vorliegt, den Schritt des Identifizierens, in welchem der zumindest zwei Segmente der Anlage (in denen Werte erfasst werden) der Fehler vorliegt, zum örtlichen Eingrenzen der Fehlerursache. Dieser Schritt wird bei dieser Ausführungsform von der Steuerung 101 durchgeführt.

Bei der Ausführungsform von Fig. 1 wird beispielsweise aus der Information, bei welchem Sensor ungewöhnliche Werte für die Zustandsinformation ermittelt worden sind, eine Eingrenzung der Fehlerursache vorgenommen. Bei einigen Ausführungsformen wird beispielsweise aus der Tatsache, dass ein Sensor im Segment S abweichende Werte liefert, geschlossen, dass der Fehler im Segment S vorliegt. Bei anderen Ausführungsformen hingegen, und so auch bei der Ausführungsform von Fig. 1, kann ein Fehler aufgrund eines Sensors im einen Segment einen Hinweis auf das Vorliegen einer Fehlerquelle in einem anderen Anlagensegment hinweisen. Zum Beispiel dient das Erkennen einer zu kleinen Rüstlücke beim Sensor 41 im Segment S6. Wenn gleichzeitig ermittelt wird, dass in den Segmenten S1 bis S4 "normale" Zustandsinformationen ermittelt werden, so wird die Fehlerursache auf das Segment S5 eingegrenzt. Auf diese Weise wird die Information von einem einzelnen Sensor nicht isoliert betrachtet, sondern wird durch das Verfahren aufgrund von Messwerten mehrerer Sensoren ein fundierter Rückschluss bzgl. örtlicher Fehlerquelleneingrenzung vorgenommen.

Weiterhin umfasst das Verfahren das Ausgeben eines Signals, das die Information enthält, in welchem Segment der Fehler vorliegt. Bei der vorliegenden Ausführungsform wird das Signal von der Steuerung 101 ausgegeben. Auf Basis hiervon wird dem Bedienpersonal der Anlage 100 bei dieser Ausführungsform auf einem Bildschirm einer Datenverarbeitungsanlage eine Fehlermeldung angezeigt, welche insbesondere angibt, in welchem Segment der Anlage 100 ein Defekt vermutet wird. Außerdem wird bei dieser Ausführungsform auch angezeigt, welche weitere Maßnahmen sinnvoll wären, um einen Defekt zu beheben (zum Beispiel: "Heizelement für Verleimungsaggregat innerhalb von einer Woche austauschen" etc.). Bei anderen Ausführungsformen werden akustische Signale ausgegeben, beispielsweise an bestimmten Positionen in der Anlage. Alternativ dazu oder zusätzlich können auch optische Warnungen ausgegeben werden. So kann beispielsweise eine Leuchte anzeigen, dass im dritten Segment eine Fehlerquelle vermutet wird, etc.

Bei dem bei der Anlage gemäß Ausführungsform von Fig. 1 durchgeführten Verfahren beinhaltet das Identifizieren, dass der Fehler einem bestimmten Aggregat oder einem bestimmten Teil der Anlage zwischen zwei Aggregaten (der Teil zwischen den Aggregate kann zum Beispiel ein Laufbandabschnitt sein oder beinhalten) zugeordnet wird, und das ausgegebene Signal von der Steuerung 101 beinhaltet die Information, welches Aggregat oder welcher Teil der Anlage zwischen zwei Aggregaten fehlerbehaftet ist. Mit anderen Worten wird bei dieser Ausführungsform der Fehler einem der Bandabschnitte 10, 20, 30, 40, 50 oder einem der Aggregate 1, 2, 3 oder 4 zugeordnet.

Bei anderen Ausführungsformen ist die örtliche Auflösung der Fehlereingrenzung höher - so kann beispielsweise ein Fehler einem bestimmten Teil eines Aggregats oder eines Laufbandabschnitts zugeordnet werden -, bei anderen Ausführungsform wiederum geringer - so wird beispielsweise ein Fehler dem Teil der Anlage, der stromaufwärts von einem bestimmten Punkt ist, zugeordnet, etc.). Die Auflösung der Fehlerquellenzuordnung kann auch unterschiedlich hoch sein, je nach dem was für eine Sorte von Fehler erkannt worden ist.

Die Erfindung deckt auch zahlreiche Abwandlungen und modifizierte Ausführungsformen der verschiedenen beschriebenen Aspekte ab.

## Patentansprüche

1. Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist, umfassend die Schritte:
- Erfassen einer Zustandsinformation, die sich auf einen Werkstückdurchfluss bezieht, in zumindest zwei Segmenten der Anlage;
- auf Basis der Zustandsinformationen Ermitteln, ob ein Fehler vorliegt, wobei vorzugsweise ermittelt wird, ob ein zukünftiger Leistungsverlust der Anlage zu erwarten ist, und dass ein Fehler vorliegt, wenn ein zukünftiger Leistungsverlust erwartet wird;
- wenn ein Fehler vorliegt, Identifizieren in welchem der zumindest zwei Segmente der Anlage der Fehler vorliegt, zum örtlichen Eingrenzen der Fehlerursache; und
- Ausgeben eines Signals, das die Information enthält, in welchem Segment der Fehler vorliegt.

2. Verfahren nach Anspruch 1, bei dem der Leistungsverlust definiert ist als ein unter einen vorbestimmten Grenzwert Fallen einer Stückzahl von durch die Anlage während einer vorbestimmten Zeiteinheit verarbeiteten Werkstücken oder als eine andere die Leistung der Anlage quantifizierende Kenngröße.

3. Verfahren nach Anspruch 1 oder 2, bei dem das Vorliegen des Fehlers ermittelt wird, bevor der Leistungsverlust tatsächlich auftritt und/oder
bei dem der Fehler auf Basis einer zeitlichen Entwicklung von erfassten Zustandsinformationen ermittelt wird.

4. Verfahren nach einem der vorstehenden Ansprüche, bei dem die Anlage zwei oder mehr Aggregate zum Bearbeiten oder Überprüfen von Werkstücken aufweist und mindestens zwei Aggregate unterschiedlichen Segmenten zugeordnet sind,
wobei das Identifizieren vorzugsweise beinhaltet, dass der Fehler einem bestimmten Aggregat oder einem bestimmten Teil der Anlage zwischen zwei Aggregaten zugeordnet wird, und das ausgegebene Signal die Information beinhaltet, welches Aggregat oder welcher Teil der Anlage zwischen zwei Aggregaten fehlerbehaftet ist.

5. Verfahren nach einem der vorstehenden Ansprüche, bei dem die erfasste Zustandsinformation in mindestens einem Segment eine Taktzahl ist, vorzugsweise eine Anzahl geförderter Werkstücke pro Zeiteinheit.

6. Verfahren nach einem der vorstehenden Ansprüche, bei dem die erfasste Zustandsinformation in mindestens einem Segment ein minimaler Abstand, ein maximaler Abstand, eine Rüstlücke zwischen zwei im Durchfluss aufeinanderfolgender Werkstücke, eine andere sich auf eine Lücke zwischen zwei aufeinanderfolgenden Werkstücken beziehende Größe, oder eine Zeitdauer ist zwischen einem ersten Zeitpunkt, zu welchem Daten für ein früheres Werkstück erfasst werden, und einem zweiten Zeitpunkt, zu welchem Daten für ein späteres Werkstück erfasst werden.

7. Verfahren nach einem der vorstehenden Ansprüche, bei dem die erfasste Zustandsinformation in mindestens einem Segment eine Zeitdauer ist, die ein Aggregat gebraucht hat, um von einem Istzustand in einen Sollzustand zu wechseln,
wobei die Zeitdauer vorzugsweise eine Loswechselzeitdauer ist.

8. Verfahren nach einem der vorstehenden Ansprüche, bei dem ein Fehler aus einer Tendenz von Messwerten einer erfassten Zustandsinformation oder mehrerer erfasster Zustandsinformationen erkannt wird.

9. Verfahren nach einem der vorstehenden Ansprüche, bei dem die erfasste Zustandsinformation mit einem oberen und/oder einem unteren Schwellenwert verglichen wird und ermittelt wird, dass ein Fehler vorliegt, wenn ein ermittelter Zustandsinformationswert größer ist als der obere Schwellenwert und/oder kleiner ist als der untere Schwellenwert.

10. Verwendung des Verfahrens nach einem der vorstehenden Ansprüche in einer Kantenanlage zum Bearbeiten einer Kante eines Werkstücks und/oder zum Aufbringen eines Kantenelements an einem Werkstück.

11. Datenträger, auf dem ein Programm gespeichert ist, welches dazu geeignet ist, auf einer Datenverarbeitungsanlage ausgeführt zu werden, die gemeinsam mit einer Anlage zum Bearbeiten eines Werkstücks, das vorzugsweise zumindest abschnittsweise aus Holz, einem Holzwerkstoff, und/oder einem Kunststoff ausgebildet ist, betreibbar ist, so dass das Verfahren nach einem der Ansprüche 1 bis 9 durchgeführt wird.

12. Sensorausrüstungsset zum Ausrüsten einer Anlage zum Bearbeiten eines Werkstücks, das vorzugsweise zumindest abschnittsweise aus Holz, einem Holzwerkstoff, und/oder einem Kunststoff ausgebildet ist, mit einer Sensorik, zum Einrichten der Anlage zur Durchführung eines Verfahrens zum Erkennen eines Fehlers und zum örtlichen Eingrenzen eines Fehlers, wobei die Sensorik mehrere für das Erfassen einer Zustandsinformation, die sich auf einen Werkstückdurchfluss bezieht, geeignete Sensoren aufweist.

13. Sensorausrüstungsset nach Anspruch 12, die mindestens eine Sensoreinrichtung mit zumindest einem der Sensoren aufweist, wobei die Sensoreinrichtung dazu eingerichtet ist, ein Signal über eine Kabelverbindung oder drahtlos an ein Empfangsgerät zu übermitteln, wobei das Sensorausrüstungsset vorzugsweise einen Datenträger nach Anspruch 11 aufweist.

14. Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist und jedes Segment zumindest einen Sensor zum Erfassen einer Zustandsinformation, die sich auf einen Werkstückdurchfluss bezieht, aufweist, **dadurch gekennzeichnet, dass** die Anlage ferner eine Steuerung aufweist, die dazu eingerichtet ist, das Verfahren nach einem der Ansprüche 1 bis 9 auszuführen.

15. Anlage nach Anspruch 14, die mit einem Sensorausrüstungsset nach Anspruch 12 oder 13 versehen ist.
